# EUROPÄISCHE PATENTSCHRIFT

(11) **EP 0 593 940 B1**
(45) Veröffentlichungstag und Bekanntmachung des Hinweises auf die Patenterteilung: **18.02.1998**
(21) Anmeldenummer: 93115493.4
(22) Anmeldetag: 25.09.1993
(51) Int. Cl.: H05B 3/86, H05B 3/06

(54) **Autoglasscheibe aus Verbundglas mit in der Zwischenschicht eingebetteten Drähten und einem Anschlusskabel**
Laminated car window pane with wires embedded in its intermediate layer and connecting cable
Vitrage automobile en verre feuilleté avec fils incorporés dans sa couche intermédiaire et câble de raccordement

(30) Priorität: 17.10.1992 DE 4235063
(43) Veröffentlichungstag der Anmeldung: 27.04.1994
(73) Patentinhaber: SAINT-GOBAIN VITRAGE INTERNATIONAL S.A., 92400 Courbevoie (FR); VEGLA Vereinigte Glaswerke GmbH, 52066 Aachen (DE)
(72) Erfinder: Görres, Helmut, D-52222 Stolberg (DE); Pikhard, Siegfried, D-52159 Roetgen (DE); Gillner, Manfred, D-52078 Aachen (DE); Sauer, Gerd, D-52224 Stolberg-Venwegen (DE)
(74) Vertreter: Biermann, Wilhelm, Dr.-Ing.

(56) Entgegenhaltungen:
- EP-A- 0 217 703
- EP-A- 0 299 868
- EP-A- 0 427 619
- EP-A- 0 477 069
- EP-A- 0 488 878
- EP-A- 0 490 723
- EP-A- 0 506 521
- DE-B- 1 807 862
- GB-A- 1 481 215
- US-A- 4 477 686
- US-A- 4 668 581
- DATABASE WPI Section Ch, Week 8104, Derwent Publications Ltd., London, GB; Class M, AN 81-04429D & JP-A-55 146 806 (FURUKAWA ELECTRIC CO.) 16. November 1980

## Beschreibung

Die Erfindung betrifft eine Verbundglasscheibe, insbesondere Autoglasscheibe, aus wenigstens zwei Einzelglasscheiben und einer diese miteinander verbindenden thermoplastischen Zwischenschicht gemäß dem ersten Teil des Anspruches 1.

Eine Verbundglasscheibe mit den eingangs erwähnten Merkmalen ist in der EP-A-0 427 619 beschrieben. Bei dieser bekannten Verbundglasscheibe besteht der elektrische Leiter aus einer Flächenbeschichtung. Die Flächenbeschichtung ist mit Sammelleitern aus Metallfolienbändern kontaktiert, die aus der Verbundglasscheibe seitlich als freie Kabelenden herausgeführt werden und gleichzeitig als Anschlußkabel verwendet werden. Die Metallfolienbänder sind in ihren Endbereichen, das heißt in dem aus der Verbundglasscheibe herausgeführten Abschnitt und in dem letzten, in der Zwischenschicht eingebetteten Abschnitt, mit einem Isolationsmantel aus einem Kunststoff umgeben. Der Isolationsmantel ist auf dem in der Zwischenschicht eingebetteten Abschnitt mit einer Klebstoffschicht versehen, die für die feste Verbindung des Isolationsmantels mit der Innenseite der beschichteten Glasscheibe sorgt. Der als Flachband-Anschlußkabel dienende Endabschnitt ragt ungeschützt aus der Verbundglasscheibe heraus.

Aus der EP-A-0 506 521 ist eine Verbundglasscheibe bekannt, bei der aus dünnen Einzeldrähten bestehende geflochtene Flachbandkabel gleichzeitig als Sammelleiter zur Kontaktierung von Metalldrähten und als Anschlußkabel dienen. Die Flachbandkabel werden als freie Kabelenden aus der Verbundglasscheibe herausgeführt.

Bei den bekannten Lösungen stellen die Anschlußkabel, die als freie Kabelenden aus der Verbundglasscheibe herausragen, störende Fehlerquellen dar. Insbesondere bei der üblichen Nachbearbeitung der Verbundglasscheibe am Rand, bei der die ausgetretene übeschüssige thermoplastische Klebermasse der Zwischenschicht mechanisch entfernt wird, können sie leicht abreißen. Dadurch wird die Verbundglasscheibe unbrauchbar. Aber auch beim Transport und beim Einbau der Verbundglasscheiben besteht die Gefahr, daß die freien Kabelenden abreißen oder beschädigt werden.

Der Erfindung liegt die Aufgabe zugrunde, eine Verbundglasscheibe der eingangs genannten Art so auszugestalten, daß sie unter den Gesichtspunkten ihrer Unempfindlichkeit bei der Manipulation und der Nachbearbeitung im Kantenbereich die an eine solche Verbundglasscheibe gestellten Anforderungen in optimaler Weise erfüllt.

Gemäß der Erfindung wird diese Aufgabe dadurch gelöst, daß die eine Einzelglasscheibe in dem Bereich, in dem das Flachband-Anschlußkabel um deren Umfangsfläche herumgeführt ist, mit einem kleinen Randausschnitt versehen ist, und daß der Endabschnitt des Flachband-Anschlußkabels auf der Außenseite der einen Einzelglasscheibe mit dieser verklebt ist.

Flachbandkabel, die sich für diesen Zweck eignen, sind insbesondere Metallfolienbänder aus Kupfer mit einer Dicke von 0,03 bis 0,08 mm und einer Breite von 2 bis 16 mm, die mit einer Isolationsschicht versehen sind. Ihre Mindestquerschnittsabmessungen richten sich selbstverständlich nach dem Verwendungszweck der Glasscheiben. Für Antennenscheiben können die Metallfolienbänder verhältnismäßig schmal und dünn sein, während sie für Heizscheiben entsprechend der für den Betrieb der Heizscheiben erforderlichen Stromstärke einen verhältnismäßig großen Querschnitt innerhalb der angegebenen Querschnittsabmessungen aufweisen müssen. Bewährt haben sich insbesondere Flachbandkabel aus Kupfer mit einer isolierenden Umhüllung aus einem reißfesten Kunststoff auf der Basis von Polyimid, die mit dem Kupferband fest, dauerhaft und wasserdicht verbunden ist.

Zusammen mit dem Isolationsmantel sollen die neuerungsgemäß zu verwendenden Flachbandkabel nicht dicker als etwa 0,3 mm sein. Derart dünne Flachbandkabel können ohne Schwierigkeiten zwischen den Einzelglasscheiben in der thermoplastischen Zwischenschicht eingebettet werden. Ihre Verklebung mit der äußeren Oberfläche der Glasscheibe stellt sicher, daß bei mechanischen Beanspruchungen des Anschlußkabels keine Kräfte auf die empfindliche Verbindungsstelle innerhalb der thermoplastischen Zwischenschicht ausgeübt werden. Ferner steht das Flachbandkabel wegen seiner sehr geringen Dicke auch bei der vorhandenen Kleberschicht nur so geringfügig über die äußere Glasoberfläche über, daß die Einbettung des Anschlußkabels in einen Elastomerrahmen und/oder in eine Kleberraupe ohne Schwierigkeiten möglich ist.

Der das Steckkontaktelement tragende Endabschnitt des Flachbandkabels kann grundsätzlich ohne feste Verbindung mit der Glasoberfläche ausgeführt sein. In zweckmäßiger Weiterbildung der Neuerung ist jedoch vorgesehen, das Steckkontaktelement bzw. den mit dem Steckkontaktelement versehenen Endabschnitt des Flachbandkabels ebenfalls mit der Glasoberfläche fest zu verbinden. Beispielsweise kann diese Verbindung mit Hilfe eines geeigneten Klebers erfolgen. Ebenfalls ist es gemäß einer besonders vorteilhaften Weiterbildung der Neuerung möglich, eine unmittelbare feste Verbindung zwischen dem Steckkontaktelement bzw. dem dieses tragenden Endabschnitt und der Glasoberfläche durch Ultraschallöten oder gegebenenfalls mit Hilfe der Reibschweißtechnik herzustellen.

Das mit dem Steckkontaktelement versehene Flachbandkabel kann aus einem vorgefertigten Bauteil bestehen, das bereits die endgültig erforderliche Länge aufweist und dessen für Anordnung auf der Außenseite der Glasscheibe bestimmter Abschnitt einerseits bereits mit dem Steckkontaktelement und andererseits auf einer Seite der Umhüllung mit einer geeigneten Kleberschicht versehen ist. Derartige vorgefertigte Anschlußkabel lassen sich mit minimalem Arbeitsaufwand bei der Herstellung der Verbundglasscheibe weiterverarbeiten.

Bei dem mit dem Flachbandkabel verbundenen Steckkontaktelement kann es sich grundsätzlich um ein beliebiges Stecker- oder Buchsenelement handeln, das sich für die Kontaktierung mit einem entsprechenden Gegenstück eignet. Während bei Heizscheiben hierfür üblicherweise Flachstecker Verwendung finden, kommen bei Antennenscheiben für diesen Zweck meist druckknopfartige Elemente zum Einsatz.

Weitere Vorteile, Einzelheiten und Weiterbildungen der Erfindung ergeben sich aus den Unteransprüchen und aus der nachfolgenden Beschreibung bevorzugter Ausführungsbeispiele anhand der Zeichnungen.

Von den Zeichnungen zeigt, jeweils als Ausschnittszeichnung
- Fig. 1: eine Ansicht einer mit einem Antennendraht versehenen Verbundglasscheibe;
- Fig. 2: eine Schnittdarstellung entlang der Linie II-II in Fig. 1;
- Fig. 3: eine Ansicht einer mit Heizdrähten versehenen Verbundglasscheibe, und
- Fig. 4: eine Schnittdarstellung entlang der Linie IV-IV in Fig. 3.

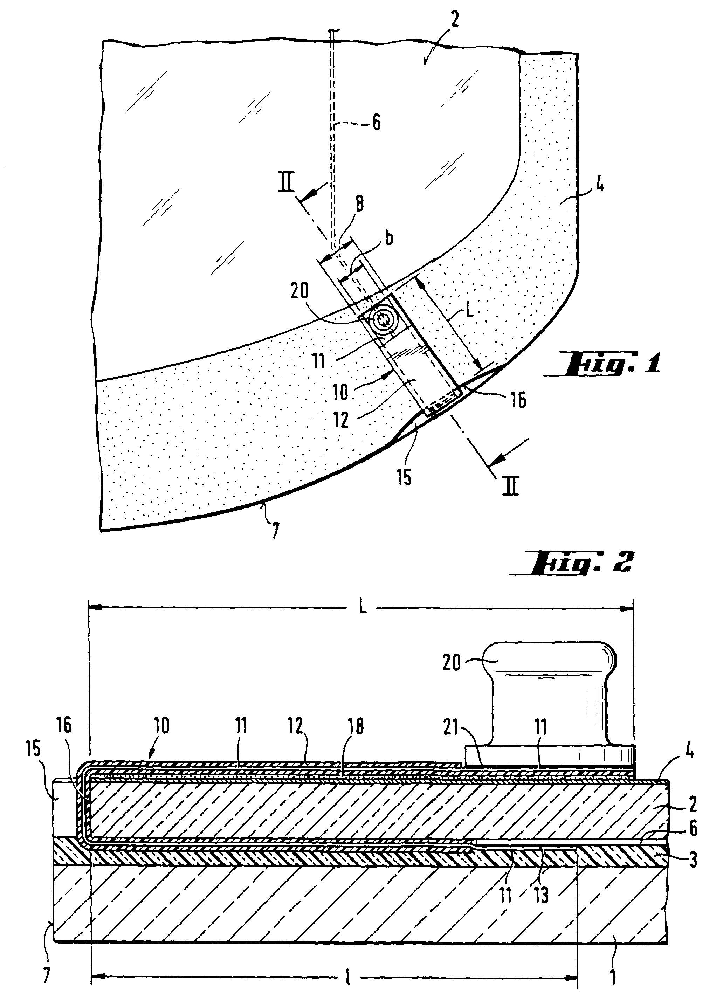

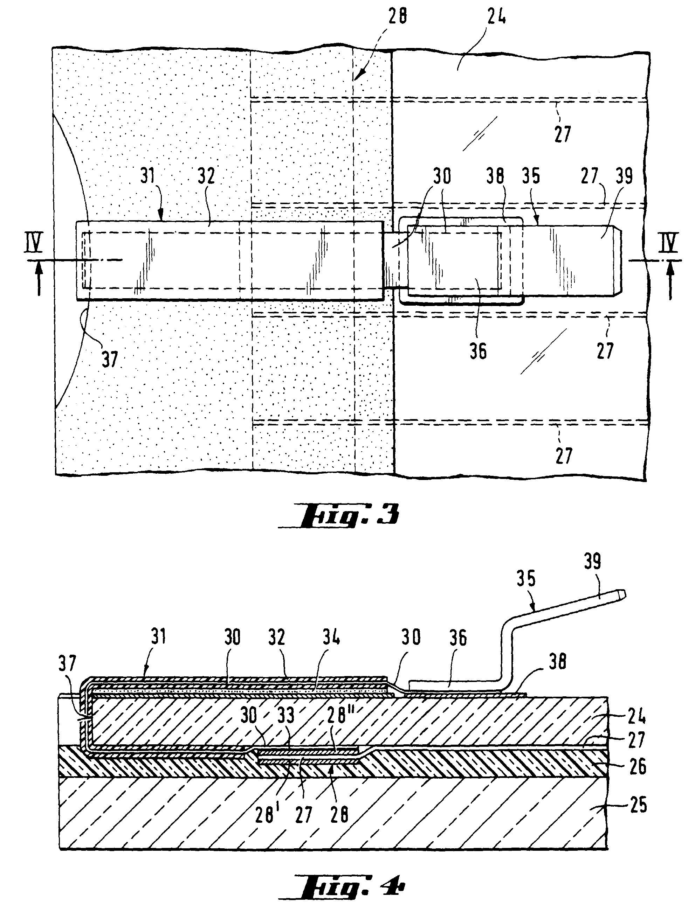

Bei der in den Fig. 1 und 2 dargestellten Verbundglasscheibe handelt es sich um eine Antennen-Windschutzscheibe, das heißt um eine Windschutzscheibe mit eingelegtem Antennendraht. Die Verbundglasscheibe umfaßt eine etwa 2 bis 3 mm dicke Einzelglasscheibe 1, die im eingebauten Zustand die zur Außenseite hin gewandte Glasscheibe bildet, sowie eine etwa 2 mm dicke Einzelglasscheibe 2, die im eingebauten Zustand dem Fahrgastraum zugewandt ist. Die beiden Einzelglasscheiben 1 und 2 sind durch eine etwa 0,8 mm dicke thermoplastische Folie 3, beispielsweise aus Polyvinylbutyral, miteinander verbunden. Die Windschutzscheibe ist für die Montage nach dem Klebeverfahren bestimmt. Zu diesem Zweck ist die Einzelglasscheibe 2 auf ihrer äußeren Oberfläche im Randbereich mit einer rahmenartigen Schicht 4 aus einer lichtundurchlässigen Einbrennfarbe versehen, durch die die dahinter liegende Kleberraupe vor UV-Strahlen geschützt wird, die eine Versprödung der Klebermasse bewirken würden.

Innerhalb der thermoplastischen Folie 3 ist ein etwa 0,15 mm dicker Metalldraht 6 angeordnet, der als Antenne für den Rundfunkempfang dienen soll. Der Antennendraht 6 kann in unterschiedlicher Form innerhalb der thermoplastischen Zwischenschicht angeordnet sein. Auch ist es für die Erfindung unerheblich, an welcher Stelle auf dem Scheibenumfang das Anschlußkabel aus der Umfangsfläche der Windschutzscheibe herausgeführt ist. Im dargestellten Beispiel ist das Anschlußkabel an der unteren Scheibenkante 7 in der Nähe einer seitlichen Ecke aus der Umfangsfläche der Verbundglasscheibe herausgeführt.

Das Flachband-Anschlußkabel 10 besteht aus einem dünnen verzinnten Kupferband 11, das von einem Isolationsmantel 12 aus einem reißfesten Kunststoff, beispielsweise auf der Basis von Polyimid, umgeben ist. Der Isolationsmantel 12 ist dauerhaft und wasserdampfdiffusionsdicht mit dem Kupferband 11 verbunden. Die Verbindung zwischen dem Kupferband 11 und dem Antennendraht 6 liegt innerhalb der thermoplastischen Folie 3 zwischen den beiden Einzelglasscheiben 1 und 2. Zu diesem Zweck ist der äußerste Endabschnitt des Flachbandkabels 10 von dem Isolationsmantel 12 befreit und über eine Lötschicht 13 mit dem Antennendraht 6 verlötet.

Die Verlötung kann z. B. in der Weise erfolgen, daß der verzinnte Endabschnitt des Flachbandkabels 10 umgeklappt wird, so daß der Metalldraht 6 zwischen den beiden verzinnten Flächen liegt.

Das Flachband-Anschlußkabel 10 ist in radialer Richtung zur Kante 7 der Glasscheibe angeordnet. Die Glasscheibe 2 ist an dieser Stelle mit einem kleinen Randausschnitt 15 versehen. Auf diese Weise steht das Flachband-Anschlußkabel 10, das um die Umfangsfläche 16 der Einzelglasscheibe 2 im Bereich des Randausschnitts 15 herumgelegt ist, nicht über die Umfangsfläche der Verbundglasscheibe über, so daß beispielsweise eine nachträgliche Kantenbearbeitung, wie das Entfernen überstehender Zwischenfolie, ohne Gefahr für das Flachband-Anschlußkabel möglich ist.

Der Dekorrahmen 4 ist aus fertigungstechnischen Gründen in aller Regel auf der zum Fahrgastraum hin gerichteten Oberfläche der Verbundglasscheibe angeordnet. Das bedeutet, daß der in der thermoplastischen Zwischenschicht 3 angeordnete Abschnitt des Flachband-Anschlußkabels 10 von der Außenseite des Fahrzeugs sichtbar ist, zumindest dann, wenn die Verbundglasscheibe nach der Klebemethode in die Fensteröffnung eingesetzt ist, und wenn der Randbereich der Glasscheibe nicht durch ein Rahmenprofil abgedeckt ist. Um die Sichtbarkeit des Flachband-Anschlußkabels zu verringern, kann die nach außen gerichtete Einzelglasscheibe 1 in diesem Bereich auf der an der Zwischenschicht 3 anliegenden Oberfläche mit einer Farbschicht versehen werden, die im Aspekt dem Farbeindruck des Dekorrahmens 4 angeglichen ist.

Das Flachband-Anschlußkabel 10 ist auf der äußeren, mit der Schicht 4 aus Einbrennfarbe versehenen Oberfläche der Einzelglasscheibe 2 mit der Glasscheibe 2 über eine Kleberschicht 18 fest und dauerhaft verklebt. Bei dem für diese Kleberschicht 18 verwendeten Kleber handelt es sich insbesondere um Selbstklebstoffe, die vom Hersteller der Flachband-Anschlußkabel 10 auf den entsprechenden Oberflächenbereich des Flachband-Anschlußkabels aufgebracht und durch eine abziehbare Folie geschützt werden. Bewährt haben sich Haftkleber auf der Basis von Isopren oder Acrylat.

Der äußerste Endabschnitt des Kupferbandes 11 ist nach teilweiser Entfernung des Isolationsmantels 12 mit einem die Form-eines Druckknopfes aufweisenden Steckkontaktelement 20 verbunden, beispielsweise durch Vernieten, Verschweißen oder über eine Lötschicht 21. Die Kleberschicht 18 setzt sich bis unterhalb des Steckkontaktelements 20 fort, so daß die beim Ankuppeln oder beim Lösen des mit dem Steckkontaktelement 20 zusammenwirkenden Steckers auf das Steckkontaktelement ausgeübten mechanischen Kräfte keine Belastung für das dünne Kupferband 11 darstellen, sondern über die Kleberschicht 18 unmittelbar von der Glasoberfläche aufgenommen werden.

Bei dem dargestellten Ausführungsbeispiel können die Dicke von Kupferbandes 11 etwa 0,05 mm, die Breite b des Kupferbandes etwa 2 bis 3 mm, die Breite B des Isolationsmantels 12 etwa 6 bis 10 mm, die Länge 1 des innerhalb der thermoplastischen Zwischenschicht 3 liegenden Abschnitts des Anschlußkabels 10 etwa 10 bis 30 mm, und die Länge L des auf der Oberfläche der Einzelglasscheibe 2 durch die Kleberschicht 18 befestigten Abschnitts des Anschlußkabels 10 etwa 20 bis 40 mm betragen.

In Fig. 3 und 4 ist eine elektrisch beheizbare Verbundglasscheibe mit den erfindungsgemäßen Merkmalen dargestellt. Die Verbundglasscheibe umfaßt die beiden Einzelglasscheiben 24 und 25 sowie die thermoplastische Zwischenschicht 26, die die beiden Einzelglasscheiben 24, 25 miteinander verbindet. In der thermoplastischen Zwischenschicht 26 sind parallel zueinander verlaufende Heizdrähte 27 angeordnet, die in Sammelleiter 28 münden. Im dargestellten Fall bestehen die Sammelleiter 28 aus jeweils zwei dünnen verzinnten Kupferbändern 28'und 28", zwischen denen die Enden der Heizdrähte 27 eingebettet sind.

Mit dem verzinnten Kupferband 28"ist das verzinnte Kupferband 30, das die Seele des mit einem Isolationsmantel 32 versehenen Flachbandkabels 31 bildet, über eine Lötschicht 33 verbunden. Es kann jedoch vorteilhaft sein, den Endabschnitt des Kupferbandes 30 zwischen den beiden verzinnten Kupferbändern 28'und 28'', das heißt in der Ebene der Heizdrähte 27 anzuordnen. Das Flachband-Anschlußkabel 31 ist über die Umfangsfläche 37 auf die freie Oberfläche der Glasscheibe 24 geführt. Der auf der freien Oberfläche der Glasscheibe 24 angeordnete Abschnitt des Flachband-Anschlußkabels 31 ist wiederum über eine Kleberschicht 34 fest und dauerhaft mit der Glasscheibe 24 verklebt.

Bei dem hier dargestellten Ausführungsbeispiel, bei dem bei einer Spannung von 12 Volt ein Heizstrom von beispielsweise 24 Ampere über die Anschlußkabel 31 geleitet wird, hat das Kupferband 30 zweckmäßigerweise eine Dicke von 0,06 bis 0,08 mm und eine Breite von 8 mm. Gegebenenfalls können auch mehrere Flachband-Anschlußkabel 31 mit einem Sammelleiter 28 verbunden werden, so daß sich der Heizstrom auf mehrere Flachband-Anschlußkabel aufteilt.

Das Steckkontaktelement 35, bei dem es sich in diesem Fall insbesondere um ein mit einer Kontaktzunge 39 versehenes Kontaktelement für den Anschluß an eine entsprechende Flachsteckbuchse handelt, kann wiederum über eine geeignete Kleberschicht mit der Oberfläche der Glasscheibe 24 fest verbunden sein. Stattdessen kann jedoch auch eine starre Lötverbindung zwischen dem Steckkontaktelement 35 und der Glasoberfläche vorgesehen sein. Eine solche direkte Lötverbindung zwischen dem Fuß 36 des Steckkontaktelements 35 bzw. dem mit dem Fuß 36 verbundenen Endabschnitt des Kupferbandes 30 und der Glasoberfläche kann mit Hilfe des Ultraschall-Lötens durchgeführt werden. Zu diesem Zweck wird zunächst die Glasoberfläche mit Hilfe eines an einen Ultraschallgeber angekoppelten Lötkolbens mit einem für derartige Zwecke bekannten Speziallot verzinnt, wodurch eine auf der Glasoberfläche fest haftende Lotschicht 38 gebildet wird. Danach wird das Steckkontaktelement 35 in einem zweiten Lötvorgang auf der Lotschicht 38 befestigt.

Eine andere Möglichkeit, das Steckkontaktelement unmittelbar auf der Glasoberfläche zu befestigen, besteht in der Anwendung der Reibschweißtechnik mit Ultraschallenergie. Zum Reibschweißen mit Ultraschall auf Glas eignen sich besonders gut duktile Metalle wie Weichaluminium. In diesem Fall muß also der Fuß des Steckkontaktelements aus diesem Metall bestehen, oder es muß eine Scheibe aus diesem Metall an dem Fuß befestigt sein. Mit Hilfe eines speziell geformten, das heißt der Form des Steckkontaktelements angepaßten Schweißkopfes (Sonotrode), der an einen Ultraschallgeber angekoppelt ist, wird das Steckkontaktelement erfaßt und unter Druck auf die Glasoberfläche aufgerieben, wobei eine intensive Verschweißung mit der Glasoberfläche erfolgt.

## Patentansprüche

1. Verbundglasscheibe, insbesondere Autoglasscheibe, aus wenigstens zwei Einzelglasscheiben (1, 2; 24, 25) und einer diese miteinander verbindenden thermoplastischen Zwischenschicht (3; 36), mit einem oder mehreren in der thermoplastischen Zwischenschicht eingebetteten Metalldraht oder Metalldrähten (6; 27) und mit wenigstens einem mit dem Metalldraht oder den Metalldrähten in elektrischer Verbindung stehenden, mit einem Isolationsmantel (12; 32) versehenen Flachband-Anschlußkabel (10; 31), dessen einer Abschnitt zwischen den Einzelglasscheiben mit dem Metalldraht oder den Metalldrähten verbunden und in der thermoplastischen Zwischenschicht eingebettet ist und dessen Endabschnitt um die Umfangsfläche einer Einzelglasscheibe im Kontakt mit dieser herumgeführt und am Ende mit einem Steckkontaktelement (20; 35) versehen ist, **dadurch gekennzeichnet**, daß die eine Einzelglasscheibe (2,24) im dem Bereich, in dem das Flachband-Anschlußkabel (10,31) um deren Umfangsfläche herumgeführt ist, mit einem kleinen Randausschnitt (15) versehen ist, und daß der Endabschnitt des Flachband-Anschlußkabels (10,31) auf der Außenseite der einen Einzelglasscheibe (2,24) mit dieser verklebt ist.

2. Verbundglasscheibe nach Anspruch 1, dadurch gekennzeichnet, daß das Flachband-Anschlußkabel (10,31) aus einem verzinnten Kupferband (11,30) mit einer Dicke von 0,01 bis 0,08 mm und einer Breite von 2 bis 16 mm und einem Isolationsmantel (12,32) aus einem reißfesten Kunststoff auf der Basis von Polyimid besteht.

3. Verbundglasscheibe nach Anspruch 1 oder 2, dadurch gekennzeichnet, daß die Dicke des Flachband-Anschlußkabels (10,31) einschließlich des Isolationsmantels (12,32) kleiner als 0,3 mm ist.

4. Verbundglasscheibe nach einem der Ansprüche 1 bis 3, dadurch gekennzeichnet, daß die Kleberschicht (18,34) für die Verklebung des äußeren Endabschnitts des Flachband-Anschlußkabels (10,31) mit der Außenseite der Glasscheibe (2,24) aus einem Klebstoff auf der Basis von Acrylat, Silikonkautschuk oder Polysiloxan besteht.

5. Verbundglasscheibe nach einem der Ansprüche 1 bis 4, dadurch gekennzeichnet, daß das mit dem Flachband-Anschlußkabel (10,31) verbundene Steckkontaktelement (20,35) als solches keine feste Verbindung zur Glasoberfläche aufweist.

6. Verbundglasscheibe nach einem der Ansprüche 1 bis 4, dadurch gekennzeichnet, daß das mit dem Flachband-Anschlußkabel (10) verbundene Steckkontaktelement (20) als solches über eine Kleberschicht (18) mit der Oberfläche der Glasscheibe (2) verbunden ist.

7. Verbundglasscheibe nach einem der Ansprüche 1 bis 4, dadurch gekennzeichnet, daß das mit dem Flachband-Anschlußkabel (31) verbundene Steckkontaktelement (35) über eine auf die Glasoberfläche aufgebrachte Lötschicht (38) unmittelbar mit der Oberfläche der Glasscheibe (24) verlötet ist.

8. Verbundglasscheibe nach einem der Ansprüche 1 bis 4, dadurch gekennzeichnet, daß das mit dem Flachband-Anschlußkabel (10,31) verbundene Steckkontaktelement (20,35) durch eine Reibschweißverbindung mit der Oberfläche der Glasscheibe verbunden ist.

9. Verbundglasscheibe nach einem der Ansprüche 2 bis 8, dadurch gekennzeichnet, daß der Isolationsmantel (12,32) des Flachband-Anschlußkabels (10,31) aus einem dem Farbeindruck des aufgedruckten und eingebrannten Dekorrahmens (4) entsprechend eingefärbten Kunststoff besteht.

10. Verbundglasscheibe nach Anspruch 9, dadurch gekennzeichnet, daß der Dekorrahmen (4) aus einer schwarzen Einbrennfarbe, und der Isolationsmantel (12,32) des Flachbandkabels (10,31) aus einem entsprechend schwarz eingefärbten Kunststoff besteht.

## Claims

1. A laminated glass sheet and more particularly an automotive glass sheet made up of individual glass sheets (1, 2; 24 and 25) and of a thermoplastic intermediate layer (3; 36) joining same together, comprising one or more metal wires (6; 27) embedded in the thermoplastic intermediate layer and at least one ribbon lead cable (10; 34) in electrical connection with the metal wire or the wires and provided with an insulating casing (12; 32), one section of such cable between the individual glass sheets being connected with the metal wires or the metal wires and being embedded in the thermoplastic intermediate layer and an end section thereof being trained around the peripheral area of an individual glass sheet in contact with the same and being provided at the end with a plug contact element (20; 35), characterized in that in that area, in which the ribbon lead cable (10 and 31) is trained around the peripheral area of the sheet, the one individual glass sheet (2 and 24) is provided with a small marginal cutout (15), and in that the end section of the ribbon lead cable (10 and 31) on the outer side of the one individual glass sheet (2 and 24) is bonded with the latter.

2. The laminated glass sheet as claimed in claim 1, characterized in that the ribbon lead cable (10 and 31) comprises a tin coated copper ribbon (11 and 30) with a thickness of 0.01 to 0.08 mm and a width of 2 to 16 mm and an insulating casing (12 and 32) of a tear resisting polyimide based plastic.

3. The laminated glass sheet as claimed in claim 1 or in claim 2, characterized in that the thickness of the ribbon lead cable (10 and 31) including the insulating casing (12 and 32) is smaller than 0.3 mm.

4. The laminated glass sheet as claimed in any one of the claims 1 through 3, characterized in that the adhesive layer (18 and 34) for bonding the outer end section of the ribbon lead cable (10 and 31) to the outer side of the glass sheet (2 and 24) includes an acrylate, silicone rubber or polysiloxane based adhesive.

5. The laminated glass sheet as claimed in any one of claims 1 through 4, characterized in that the plug contact element (20 and 35) connected with the ribbon lead cable (10 and 31) does not as such possess any fixed connection with the surface of the glass.

6. The laminated glass sheet as claimed in any one of claims 1 through 4, characterized in that the plug contact element (20) connected with the ribbon lead cable (10) is connected as such with the surface of the glass sheet (2) by means of an adhesive layer (18).

7. The laminated glass sheet as claimed in any one of claims 1 through 4, characterized in that the plug contact element (35) connected with the ribbon lead cable (31) is directly soldered or brazed by means of a solder or brazing material layer (38), arranged on the glass surface, with the surface of the glass sheet (24).

8. The laminated glass sheet as claimed in any one of claims 1 through 4, characterized in that the plug element (20 and 35) connected with the ribbon lead cable (10 and 31) is connected by means of a friction welded joint with the surface of the glass sheet.

9. The laminated glass sheet as claimed in any one of claim 2 through 8, characterized in that the insulating casing (12 and 32) of the ribbon lead cable (10 and 31) is made up of a plastic colored to match the color impression color given by the printed and burned on decorative frame (4).

10. The laminated glass sheet as claimed in claim 9, characterized in that the decorative frame (4) includes a black burned on coloring material and the insulating casing (12 and 32) of the ribbon lead cable (10 and 31) includes a plastic with a corresponding black coloration.

## Revendications

1. Vitrage en verre feuilleté, en particulier vitrage pour automobile, constitué d'au moins deux feuilles de verre individuelles (1,2; 24,25) et d'une couche intermédiaire thermoplastique (3; 26) qui unit les deux feuilles de verre l'une à l'autre, avec un ou plusieurs fils métalliques (6; 27) noyés dans la couche intermédiaire thermoplastique et au moins un câble-ruban plat de raccordement (10,31) pourvu d'une gaine isolante (12; 32) et connecté électriquement au(x) fil(s) métallique(s), dont une section située entre les feuilles de verre individuelles est connectée au(x) fil(s) métallique(s) et est noyée dans la couche intermédiaire thermoplastique et dont la section d'extrémité passe autour de la face périphérique d'une feuille de verre individuelle, en contact avec celle-ci, et est pourvue à son extrémité d'un élément de contact d'enfichage (20; 35), caractérisé en ce que la première feuille de verre individuelle (2,24), dans la zone dans laquelle le câble-ruban plat de raccordement (10,31) passe autour de sa face périphérique, est pourvue d'une petite échancrure marginale (15), et en ce que la section d'extrémité du câble-ruban plat de raccordement (10,31) située sur la face extérieure de la première feuille de verre individuelle (2,24) est collée à cette dernière.

2. Vitrage en verre feuilleté suivant la revendication 1, caractérisé en ce que le câble-ruban plat de raccordement (10,31) est formé d'un ruban de cuivre étamé (11,30) d'une épaisseur de 0,01 à 0,08 mm et d'une largeur de 2 à 16 mm, et d'une gaine isolante (12,32) faite d'une matière plastique résistante à la déchirure à base de polyimide.

3. Vitrage en verre feuilleté suivant la revendication 1 ou 2, caractérisé en ce que l'épaisseur du câble-ruban plat de raccordement (10,31) y compris la gaine isolante (12,32) est inférieure à 0,3 mm.

4. Vitrage en verre feuilleté suivant l'une quelconque des revendications 1 à 3, caractérisé en ce que la couche d'adhésif (18,34) pour le collage de la section d'extrémité extérieure du câble-ruban plat de raccordement (10,31) à la face extérieure de la feuille de verre (2,24) est faite d'une colle à base d'acrylate, de caoutchouc silicone ou de polysiloxane.

5. Vitrage en verre feuilleté suivant l'une quelconque des revendications 1 à 4, caractérisé en ce que l'élément de contact d'enfichage (20,35) relié au câble-ruban plat de raccordement (10,31) ne présente, en tant que tel, aucune liaison fixe à la surface du verre.

6. Vitrage en verre feuilleté suivant l'une quelconque des revendications 1 à 4, caractérisé en ce que l'élément de contact d'enfichage (20) relié au câble-ruban plat de raccordement (10) est relié, en tant que tel, par l'intermédiaire d'une couche d'adhésif (18) à la surface de la feuille de verre (2).

7. Vitrage en verre feuilleté suivant l'une quelconque des revendications 1 à 4, caractérisé en ce que l'élément de contact d'enfichage (35) relié au câble-ruban plat de raccordement (31) est brasé, par l'intermédiaire d'une couche de brasure (38) appliquée sur la surface du verre, directement à la surface de la feuille de verre (24).

8. Vitrage en verre feuilleté suivant l'une quelconque des revendications 1 à 4, caractérisé en ce que l'élément de contact d'enfichage (20,35) relié au câble-ruban plat de raccordement (10,31) est relié, par une jonction soudée par friction, à la surface de la feuille de verre.

9. Vitrage en verre feuilleté suivant l'une quelconque des revendications 2 à 8, caractérisé en ce que la gaine isolante (12,32) du câble-ruban plat de raccordement (10,31) est faite d'une matière plastique colorée d'une manière correspondant à l'effet de couleur perçu du cadre décoratif (4) imprimé et cuit.

10. Vitrage en verre feuilleté suivant la revendication 9, caractérisé en ce que le cadre décoratif (4) est fait d'une encre à cuire noire, et la gaine isolante (12,32) du câble-ruban plat (10,31) est faite d'une matière plastique colorée de manière correspondante en noir.
